# EUROPEAN PATENT SPECIFICATION

(11) **EP 4 481 434 B1**
(45) Date of publication and mention of the grant of the patent: **15.10.2025**
(21) Application number: 23180327.1
(22) Date of filing: 20.06.2023
(51) Int. Cl.: G01S 7/497, G01S 7/481, G01S 17/95

(54) **LIDAR AUTOCALIBRATION**
LIDAR-AUTOKALIBRIERUNG
AUTO-ÉTALONNAGE LIDAR

(43) Date of publication of application: 25.12.2024
(73) Proprietor: Vaisala, OYJ, 00421 Helsinki (FI)
(72) Inventor: KALLIO, Jukka, 00670 Helsinki (FI)
(74) Representative: Berggren Oy

(56) References cited:
- US-A1- 2005 179 888
- US-A1- 2016 025 842
- US-B1- 7 064 817

## Description

### TECHNICAL FIELD

The example and non-limiting embodiments of the present invention relate to a calibration arrangement for a lidar (light detection and ranging) device.

### BACKGROUND

The term lidar refers to a surveying technique that enables measuring a distance to a target by illuminating the target by a pulsed laser light and by using a receiver to measure the pulses reflected from the target. The reflected pulses may also be referred to as backscattering or backscattered light. Basic components of a lidar device include a transmitter for generating the pulsed laser light, a receiver for recording the backscattered light, an optical system for shaping and guiding the transmitted and backscattered light within the lidar device, and processing means for determining the distance to the target based on the backscattered light.

Lidar-based devices find use any various fields, including agriculture, archeology, automotive industry, geology, mining, astronomy, robotics, etc. One particularly interesting field of application of lidar devices is meteorology, where a ground-based lidar device may be employed for atmospheric measurements, e.g. to measure backscatter from clouds and/or aerosols or vapors in the atmosphere. Such a device may be referred to as an atmospheric lidar, which may be employed to provide functions such as cloud height estimation and estimation of meteorological variables such as temperature, humidity and/or winds.

A lidar for making meteorological measurements is known from US 2016/025842 A1.

An atmospheric lidar is typically installed outdoors for continuous operation, while such lidar device may be operational for even tens of years. The environmental conditions may cause changes at components of the lidar device, which in turn degrades accuracy of the measurement results obtained from the lidar device. As a particular example in this regard, temperature changes in the operating environment of the lidar device may change laser power and receiver sensitivity, which may have a significant detrimental effect on accuracy of the measurement results of the lidar device. Another factor that may affect the measurement accuracy is replacement of any lidar components in the field: the transmitter, the receiver and the optical system of the lidar are carefully pre-calibrated and aligned with each other upon manufacturing the device to optimize the measurement performance, while replacing any of these components in field conditions with a new one may result in a small misalignment and/or loss of signal and, consequently, the accuracy of subsequent measurement results may be compromised. Yet further, an atmospheric lidar operated in field conditions is susceptible to vibration and/or external impacts that may not be sufficient to cause actual damage but that may still have a detrimental effect to the alignment between the transmitter, the receiver and the optical system of the lidar device, thereby possibly leading to compromised measurement performance.

### SUMMARY

Therefore, it is an object for at least some embodiments of the present invention to provide a technique that enables improving accuracy and reliability of measurement results of a lidar device.

According to an example embodiment, a lidar assembly for atmospheric measurements is provided, the lidar assembly comprising a primary lens assembly for collimating a transmitter beam originating from a first focal point within the lidar assembly to illuminate a target at a distance from the lidar assembly and for focusing a backscattered light from the target to a second focal point within the lidar assembly; a transmitter, arranged in said first focal point, for generating said transmitter beam for transmission towards the primary lens assembly; a receiver, arranged in said second focal point, for capturing said backscattered light entering the lidar assembly through the primary lens assembly; a beam reflector, arranged between the first focal point and the primary lens assembly, for reflecting the backscattered light towards said second focal point such that it allows the transmitter beam to reach the primary lens assembly, wherein the lidar assembly comprises a calibrator subsystem comprising: a beam sampler, arranged between the beam reflector and the primary lens assembly, for reflecting a portion of the transmitter beam as a calibrator beam; and an optical arrangement for transferring the calibrator beam towards a selected one of a plurality of targets in the calibrator subsystem wherein said plurality targets include at least the following: a first scattering plate arranged to produce a diffuse reflection of the calibrator beam meeting its surface, thereby invoking a backscattered calibrator beam for transfer to the receiver via said optical arrangement, via the beam sampler and via the beam reflector, and at least one element arranged to prevent provision of the backscattered calibrator beam.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 schematically illustrates some components of a lidar assembly according to an example;
Figure 2A schematically illustrates some components of a lidar assembly according to an example;
Figure 2B schematically illustrates some components of a lidar assembly according to an example;
Figure 3A schematically illustrates some components of a lidar assembly according to an example;
Figure 3B schematically illustrates some components of a lidar assembly according to an example;
Figure 4 schematically illustrates some components of a lidar assembly according to an example; and
Figure 5 schematically illustrates some components of a lidar assembly according to an example;

### DESCRIPTION OF SOME EMBODIMENTS

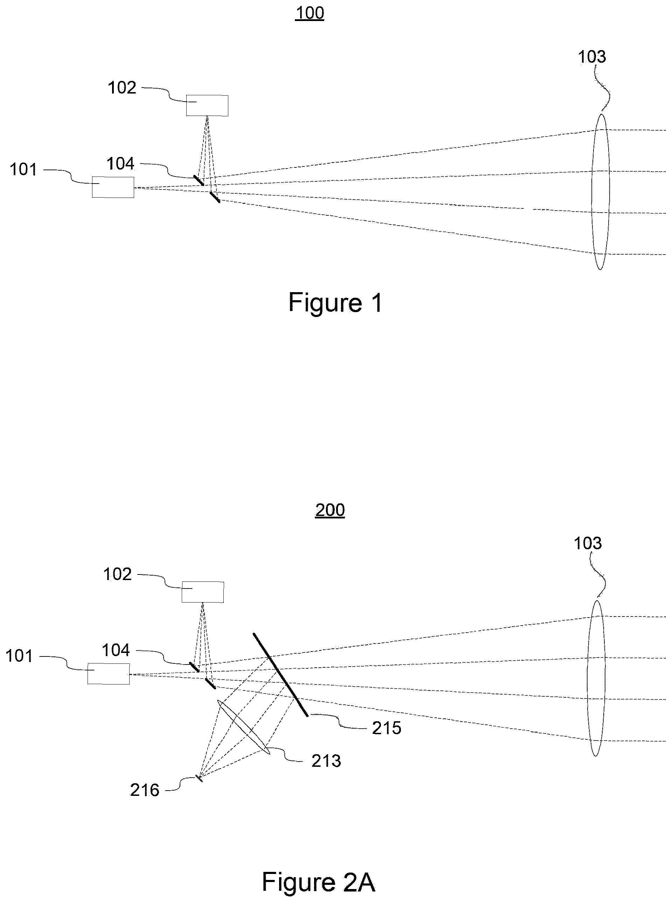

Figure 1 schematically illustrates some components of a lidar assembly 100 for a lidar device that is suitable for atmospheric measurements. The lidar assembly 100 includes a transmitter 101 for generating a light beam for illuminating a target at a distance from the lidar assembly 100 and a receiver 102 for capturing backscattered light from the target. The transmitter 101 is arranged in a first focal point of a primary lens assembly 103 and the receiver 102 arranged in a second focal point of the primary lens assembly 103, where the backscattered light may be directed to the second focal point by reflection from a mirror 104. The mirror 104 is arranged between the transmitter 101 and the primary lens assembly 103 and it is provided with a hole that enables light from the transmitter 101 to pass the mirror 104 and exit the lidar assembly 100 through the primary lens assembly 103, whereas the mirror area surrounding the hole serves to reflect backscattered light entering the lidar assembly 100 through the primary lens assembly 103 to the receiver 102. The mirror 104 serves as an example of a beam reflector. Further examples in this regard are provided later in this text.

According to an example, both the mirror 104 and the hole therethrough are circular with the hole provided in or close to the center of the mirror 104. Consequently, the area of the primary lens assembly 103 may be (conceptually) divided into a center portion and an edge portion that surrounds the center portion, where the center portion servers to collimate the light beam originating from the transmitter 101 and the edge portion serves to focus the backscattered light that enters the lidar assembly 100 at the receiver 102 via the mirror 104. The light beam originating from the transmitter 101 may be referred to as a transmitter beam and the backscattered light that enters the lidar assembly 100 through the primary lens assembly 103 and that is reflected via the mirror 104 to the receiver 102 may be referred to as a receiver beam. Due to the hole in or close to the center of the mirror 104, the receiver beam has an annular shape and it surrounds the transmitter beam emitted through the hole in the mirror 104. The route of the transmitter beam from the transmitter 101 through the hole in the mirror 104 and through the primary lens assembly 103 may be referred to as a first optical path, whereas the route of the receiver beam through the primary lens assembly 103 and via the mirror 104 to the receiver 102 may be referred to as a second optical path.

The diameter and optical characteristics of the primary lens assembly 103 and the distance between the primary lens assembly 103 and the other components of the lidar assembly 100 may be selected according to the requirements of the lidar device that employs the lidar assembly 100. In a non-limiting example, the primary lens assembly 103 comprises a doublet lens that is 150 mm in diameter and the lens assembly 103 is arranged at approximately 500 mm distance from the transmitter 101.

The transmitter 101 may be provided as a laser transmitter that is arranged to generate laser pulses of desired characteristics under control of a control entity (not shown). The receiver 102 is arranged to capture a measurement signal that is descriptive of the backscattered light and provide the captured measurement signal for analysis by the control entity and/or by an external processing entity. As an example, the receiver 102 may comprise a photodetector, typically followed by an amplifier, whereas in another example the receiver 102 may comprise a photodiode arranged to act as a photon counter.

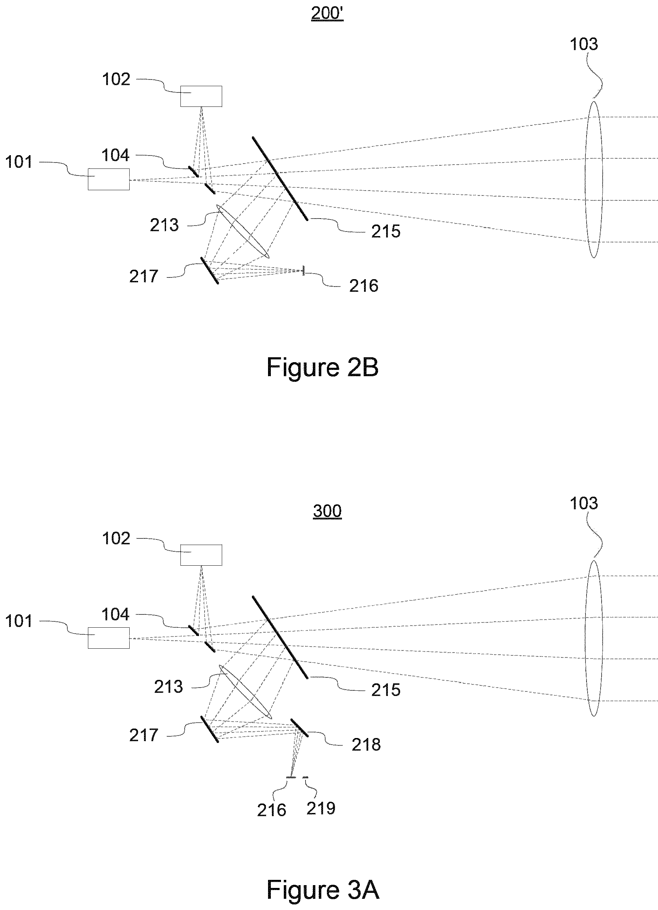

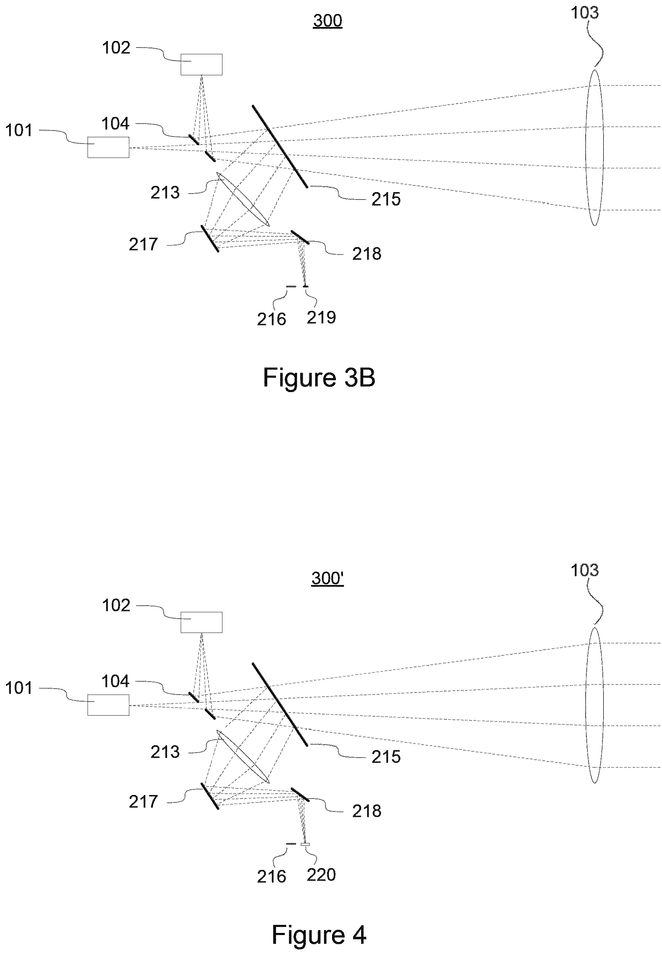

The lidar assembly 100 may include a number of further elements in addition to those shown in Figure 1, which only illustrates the overall operating principle of a known lidar assembly that is applicable for a lidar device that is suitable for atmospheric measurements and that serves as an exemplifying framework for describing various aspects that pertain to automated calibration of a lidar assembly applied in the lidar device. As non-limiting examples in this regard, the lidar assembly 100 may further include transmitter pre-optics for shaping the transmitter beam before it travels through the hole in the mirror 104 and/or receiver pre-optics for shaping the beam entering the lidar assembly 100 via the primary lens assembly 103 before it meets the receiver 102. The lidar assembly 100 may be implemented, for example, as described in detail in US patent publication no. 2005/0179888 A1 with references to Figures 3 and 4 therein.

A lidar device that employs the lidar assembly 100 described above includes, in addition to the lidar assembly 100, a (tube-like) casing that serves to protect components of the lidar assembly 100 and other components of the lidar device arranged therein. The lidar device further comprises the control entity that is arranged to control operation of the transmitter 101 and to control capturing of the measurement signal via operation of the receiver 102, whereas the control entity may be further arranged to carry out the analysis of the measurement and/or to transmit the measurement signal to the external processing entity for carrying out the analysis therein. The lidar device may further comprise a user interface (UI) that includes user input means (e.g. one or more keys, one or more buttons, a touchscreen, a touchpad, ...) for entering control input for controlling operation of the lidar device and output means (e.g. a display or a touchscreen) for providing a user with information about operational state of the lidar device and/or for displaying measurement results to the user. The control entity may be implemented via operation of a computing apparatus that comprises one or more processors and one or more memories for storing one or more computer programs, where the one or more computer programs are arranged to cause the computing apparatus to operate as the control entity of the lidar device according to the present disclosure when executed by the one or more processors.

Figure 2A schematically illustrates some components of a lidar assembly 200, which includes the components described above for the lidar assembly 100 together with a conceptual example of a calibrator subsystem, whereas implementation of the calibrator subsystem is described in the following via a number of non-limiting examples that refer to respective illustrations provided in Figures 3A, 3B, 4 and 5. In particular, the example of Figure 2A serves to illustrate the concept of using the calibrator subsystem to create a model of the receiver beam, which enables carrying out automatic calibration of the lidar assembly 200 under control of the control entity of the lidar assembly 200. The conceptual example of Figure 2A, however, illustrates an arrangement where the calibrator subsystem is always active, which would disturb normal operation of the lidar assembly 200. Hence, in a real-life implementation the calibrator subsystem is further provided with an activation mechanism that enables selectively activating or deactivating the calibrator subsystem, as described in the non-limiting examples provided in the following. In the present disclosure the automatic calibration operation enabled by the calibrator subsystem is predominantly referred to as calibration, whereas it may be also referred to as autocalibration due to the lidar assembly 200 being able to carry out the calibration in the course of its operation without involvement of external calibration tools and/or without intervention of maintenance personnel.

It is worth noting that the illustration of Figure 2A, as well as those of the subsequent illustrations, are to be construed as highly schematic in that they do not intend to accurately depict relative positions of the components appearing therein, their sizes in relation to each other, actual appearance of the respective elements of the illustrated lidar assembly or the transmission of light through the optical components of the illustrated lidar assembly but the illustrations rather serve as a framework that facilitates describing certain functional and structural aspects that pertain to various examples of the lidar assembly according to the present disclosure.

In the conceptual example illustrated in Figure 2A the calibrator subsystem includes a beam sampler 215, a calibrator lens assembly 213 and scattering plate 216. The beam sampler 215 is arranged to intersect the first and second optical paths in a position between the mirror 104 and the primary lens assembly 103 and it is provided for reflecting part of the transmitter beam towards the calibrator lens assembly 213 and for passing the remaining part of the transmitter beam towards the primary lens assembly 103. The beam sampler 215 further passes most of the receiver beam from the direction of the primary lens assembly 103 towards the mirror 104 and further towards the receiver 102. The portion of the transmitter beam that is reflected from the beam sampler 215 towards the calibrator lens assembly 213 (for transfer to the scattering plate 216) may be referred to as a calibrator beam, whereas the remaining part of the transmitter beam that is passed towards the primary lens assembly 103 may be referred to as a primary transmitter beam.

The beam sampler 215 may be arranged to reflect a predefined percentage of the transmitter beam and hence a predefined portion of the radiant flux of the transmitter beam as the calibrator beam. In a non-limiting example, the beam sampler 215 may operate to reflect approximately 4 % of the transmitter beam as the calibrator beam whereas the remaining approximately 96 % of the transmitter beam may be passed towards the primary lens assembly 103 as the primary transmitter beam. In an example, the beam sampler 215 comprises a glass plate that is arranged in a position between the mirror 104 and the primary lens assembly 103 such that it intersects the transmitter beam originating from the transmitter 101 (and the receiver beam arriving from the direction of the primary lens assembly 103) in an oblique tilting angle. The side of the glass plate that is facing the transmitter 101 is preferably uncoated or provided with a weakly reflective coating, whereas the opposite side of the glass plate may be provided with anti-reflective coating to prevent unnecessary losses and multiple reflections in the transmitter and receiver beams. Using the uncoated glass as the transmitter-facing side of the glass plate results in approximately 4 % of the transmitter beam being reflected as the calibrator beam.

In general, the calibrator subsystem includes one or more targets and an optical arrangement for transferring the calibrator beam towards one of the targets in the calibrator subsystem. In the lidar assembly 200 according to the conceptual example of Figure 2A the optical arrangement comprises the calibrator lens assembly 213 and the one or more targets comprise the scattering plate 216, where the calibrator lens assembly 213 is arranged to focus the calibrator beam at the surface of the scattering plate 216. In an example, the calibrator lens assembly 213 comprises one or more lenses sharing the same optical axis that are arranged to collimate the light conveyed in the calibrator beam reflected from the beam sampler 215 and to focus the collimated light at the surface of the scattering plate 216. The diameter and optical characteristics of the calibrator lens assembly 213 and the length of the optical path from the beam sampler 215 to the scattering plate 216 may be selected according to the requirements of the lidar device that employs the lidar assembly 200.

In a non-limiting example, the calibrator lens assembly 213 comprises a pair of lenses sharing the same optical axis where both lenses have optical design that is similar to that of a main lens applied in the primary lens assembly 103 and that each have a diameter that is substantially half of the diameter of the main lens applied in the primary lens assembly 103. Hence, the pair of lenses of the calibrator lens assembly 213 may have optical characteristic that are substantially similar to those of the main lens of the primary lens assembly 103 but that each have a size that is substantially half of the size of the main lens. In a non-limiting example in this regard, the pair of lenses of the calibrator lens assembly 213 and the main lens of the primary lens assembly 103 may be provided as respective doublet lenses. Usage of such an arrangement of lenses in the calibrator lens assembly 213 and in the main lens assembly 103 results in accurate modeling of optical aberration characteristics of the primary lens assembly 103 in the calibrator subsystem, thereby facilitating accurate (auto)calibration of the lidar assembly 200 via operation of the calibrator subsystem.

The scattering plate 216 of the calibrator subsystem is arranged to provide a diffuse reflection of the calibrator beam that meets the surface of the scattering plate 216. The diffuse reflection characteristics of the scattering plate 216 model those of an atmospheric target such as a cloud, and the scattering plate 216 receives a scaled version of an image of the transmitter beam that would be formed on a surface of the atmospheric target when met by the (primary) transmitter beam. The diffuse reflection from the scattering plate 216 hence provides a backscattered calibrator beam in response to the calibrator beam meeting the scattering plate 216. The diffusely-reflecting surface of the scattering plate 216 may be made, for example, of a suitable ceramic material, such as (substantially white) aluminum oxide (Al₂O₃) or polytetrafluoroethylene (such as Spectralon^{®}).

The backscattered calibrator beam resulting from the diffuse reflection from the scattering plate 216 is transferred in the opposite direction through the optical arrangement (which in the example of Figure 2A comprises the calibrator lens assembly 213) and is reflected by the beam sampler 215 towards the mirror 104, which in turn reflects the backscattered calibrator beam to the receiver 102. Hence, the backscattered calibrator beam appears to the receiver 102 as if it were a receiver beam backscattered from an atmospheric target such as a cloud.

Figure 2B schematically illustrates some components of a lidar assembly 200', which is variation of the lidar assembly 200. Therein, the difference to the lidar assembly 200 is that the optical arrangement of the calibrator subsystem further includes a calibrator beam reflector 217 for reflecting the calibrator beam received via the calibrator lens assembly 213 towards the scattering plate 216 such that the reflected calibrator beam is focused at the surface of the scattering plate 216. The calibrator beam reflector 217 also serves to reflect the backscattered calibrator beam from the direction of the scattering plate 216 through the calibrator lens assembly 213 towards the beam sampler 215 and further via the mirror 104 to the receiver 102. Like the lidar assembly 200 of Figure 2A, also the lidar assembly 200' of Figure 2B serves a conceptual example of the calibrator subsystem, where the calibration functionality is continuously active, whereas in a real-life implementation the calibrator subsystem is further provided with a mechanism for selectively activating or deactivating the calibrator subsystem.

The calibrator beam reflector 217 may be arranged to attenuate the calibrator beam as received from the beam sampler 215 in order to model attenuation typically occurring in the primary transmitter beam and in the receiver beam. The reflecting surface of the calibrator beam reflector 217 has preferably similar reflection characteristics as the beam sampler 215, in other words the calibrator beam reflector 217 is preferably arranged the reflect the predefined percentage of the calibrator beam as received via the calibrator lens assembly 213 from the beam sampler 215 towards the scattering plate 216, e.g. approximately 4 % of the calibrator beam. Hence, also the calibrator beam reflector 217 may comprise a glass plate that has an uncoated glass surface serving to reflect the calibrator beam towards the scattering plate 216 and to reflect the backscattered calibrator beam towards the beam sampler 215.

Preferably, the calibrator beam reflector 217 is arranged with respect to the beam sampler 215 and the scattering plate 216 such that the main axis of the portion of the calibrator beam reflected from the calibrator beam reflector 217 towards the scattering plate 216 is in parallel or substantially in parallel with the main axis of the transmitter beam (and that of the primary transmitter beam). In such an arrangement rays close to an edge of the transmitter beam that are reflected in a relatively sharp angle from the beam sampler 215 are reflected in a relatively wide angle from the calibrator beam reflector 217 and vice versa, thereby ensuring that substantially equal amount of light from both edges of transmitter beam are conveyed in the calibrator beam to the scattering plate 216.

In a variation of the lidar assembly 200', the order of the calibrator lens assembly 213 and the calibrator beam reflector 217 in the optical path from the beam sampler 215 to the scattering plate 216 is reversed such that the calibrator beam reflector 217 is arranged to reflect the calibrator beam received directly from the beam sampler 215 towards the scatting plate 216 via the calibrator lens assembly 213, whereas the backscattered calibrator beam is transferred via the same optical path in the opposite direction. However, due to divergence of the backscattered calibrator beam this variation may lead to an increased size of the calibrator beam reflector 217 and the calibrator lens assembly 213 and hence it may not be a feasible approach in those application scenarios where a small size of the lidar assembly 200' is an important design criterion.

In a variation of the lidar assembly 200 or 200', the spatial relationship between the optical arrangement of the calibrator subsystem and the scattering plate 216 is modified such that the calibrator beam is focused at a predefined distance behind the scattering plate 216. This may be accomplished, for example, by positioning the scattering plate 216 closer to the final optical component of the optical subsystem in the optical path from the beam sampler 215 to the scattering plate 216. Consequently, the calibrator beam meets the surface of the scattering plate 216 off-focus, and the resulting backscattered calibrator beam serves to model a receiver beam backscattered from a target (such as a bottom of a cloud) that is at a certain distance from the lidar device, where the certain distance is shorter than the distance at which the primary lens assembly 103 focuses the light conveyed in the transmitter beam. The certain distance may be selected and the predefined distance may be set suitably during manufacturing of the lidar assembly 200, 200'.

The lidar assemblies 200 and 200' described in the foregoing serve as non-limiting examples that illustrate the operating principle of the calibrator subsystem. However, in the lidar assemblies 200 and 200' the calibrator subsystem is continuously active, thereby resulting in a scenario where the transmitter beam originating from the transmitter 101 would continuously result in the receiver 102 obtaining both the receiver beam that is backscattered from an atmospheric object at a distance from the lidar assembly 200, 200' and the backscattered calibrator beam from the calibrator subsystem. Consequently, the measurement signal recorded at the receiver 102 would include both an actual measurement signal component arising from the receiver beam and a calibration signal component arising from the backscattered calibrator beam, which as such would not result in a meaningful operation of the lidar assembly 200, 200'.

In real-life implementation, the calibrator subsystem of the lidar assembly 200, 200' (or the lidar assembly in general) is be provided with the activation mechanism that enables selectively activating or deactivating the calibrator subsystem. Basically, the calibrator subsystem may be activated by allowing the calibrator beam to enter the calibrator system and allowing the backscattered calibrator beam to reach the receiver 102. Consequently, examples of implementing the activation mechanism include the following:
- A mechanism that enables adjusting the position and/or orientation of the beam sampler 215 such that it allows for selectively enabling or disabling transmission of the calibrator beam towards the scattering plate 216.
- A mechanism (e.g. a moveable opaque element) that enables selectively blocking or unblocking the light path from the beam sampler 215 to the scattering plate 216;
- A mechanism that enables adjusting the position and/or orientation of a component within the optical arrangement of the calibrator subsystem such that it enables selectively enabling or disabling transmission of the calibrator beam to the scattering plate 216.

While each of the above-described examples of implementing the activation mechanism are applicable in real-life implementations of the lidar assembly making use of the calibrator subsystem exemplified via the lidar assemblies 200, 200', in the following we describe non-limiting examples of lidar assemblies where the activation mechanism is provided via a moveable component of the calibrator subsystem. In this regard, the optical arrangement of the calibrator subsystem may be provided with a selection mechanism that enables directing the calibrator beam towards a selected one of a plurality of targets in the calibrator subsystem, where the plurality of targets includes the scattering plate 216 for activating the calibrator subsystem and at least one other target for deactivating the calibrator subsystem. As a non-limiting example in this regard, the selection mechanism may comprise a moveable mirror that may be selectively arranged into one of a plurality of predefined positions with respect to the calibrator beam reflector 217, where each of the predefined positions serves to reflect the calibrator beam towards a corresponding one of the plurality of targets in the calibrator subsystem. Non-limiting examples of the selection mechanism are provided in the following.

Figures 3A and 3B schematically illustrate some components of a lidar assembly 300, which is basically a variation of the lidar assembly 200', complemented with the activation mechanism. Therein, a difference to the lidar assembly 200' is that the calibrator subsystem of the lidar assembly 300 includes two targets: the scattering plate 216 and an absorber element 219 that serves to prevent provision of the backscattered calibrator beam towards the moveable mirror 218 and further to the receiver 102. In this regard, the absorber element 219 may be arranged to absorb and/or redirect the optical energy conveyed by the calibrator beam. In this regard, redirecting the optical energy may involve, for example, reflecting the calibrator beam in a direction that is offset from the moveable mirror 218. Another difference to the lidar assembly 200' is that the optical arrangement of the calibrator subsystem in the lidar assembly 300 further includes, as the selection mechanism, a moveable mirror 218 that may be selectively arranged into one of at least two predefined positions with respect to the calibrator beam reflector 217: in a first predefined position the moveable mirror 218 reflects the calibrator beam from the calibrator beam reflector 217 towards the scattering plate 216 such that the calibrator beam is focused at the surface of the scattering plate 216, whereas in a second predefined position the moveable mirror 218 reflects the calibrator beam towards the absorber element 219.

The surface of the absorber element 219 may comprise or it may be made of material that is substantially non-reflecting (and non-scattering), the absorber element 219 thereby absorbing the optical energy conveyed by the calibrator beam via reducing or even completely eliminating reflection and/or scattering of the calibrator beam from the absorber element 219 when directed thereto. Non-limiting examples of such materials include anti-reflection coated black filter glass and any commercially available optical black material. In some examples, additionally or alternatively, the absorber element 219 may be positioned with respect to other components of the calibrator subsystem such that the optical arrangement therein is arranged to focus the calibrator beam off the surface of the absorber element 219 (when directed thereto via operation of the selection mechanism), thereby reducing the amount of light reflected and/or scattered from the surface of the absorber element 219 towards the receiver 102. In some examples, additionally or alternatively, the surface of the absorber element 219 may be provided in an oblique angle with respect to the main axis of the calibrator beam to direct any reflection from the surface away from the moveable mirror 218.

Hence, in the lidar assembly 300 the calibrator subsystem is active (i.e. operational) when the moveable mirror 218 is in the first predefined position and the calibrator subsystem is inactive (i.e. non-operational or "off") when the moveable mirror 218 is in the second predefined position. Figure 3A depicts a scenario where the moveable mirror 218 is in the first position, thereby reflecting the calibrator beam towards the scattering plate 216 and, consequently, providing the backscattered calibrator beam towards the calibrator beam reflector 217 through the optical arrangement of the calibrator subsystem. Figure 3B depicts a scenario where the moveable mirror 218 is in the second position, thereby reflecting the calibrator beam towards the absorber element 219, which does not result in provision of the backscattered calibrator beam via a reflection or scattering of the calibrator beam towards the moveable mirror 218.

The calibrator subsystem may be applied to improve accuracy of measurement results obtainable by an atmospheric lidar device that employs the lidar assembly 300 via the control entity operating the calibrator subsystem to derive a calibrator system signal that is descriptive of light conveyed in the backscattered calibrator beam and that is applicable for carrying out the (auto)calibration of the lidar assembly 300. In this regard, the control entity may operate the lidar assembly 300 to carry out one or more calibration measurements with the calibrator subsystem activated and one or more normal measurements with the calibrator subsystem deactivated. The one or more calibration measurements and the one or more normal measurements are preferably carried out within a relatively short time window (e.g. within a time period shorter than one second) to facilitate carrying out these measurements in substantially similar atmospheric conditions. The respective measurement results from both the calibration measurements and the normal measurements include the signal from the atmosphere, received through the primary lens assembly 103, whereas the measurement results from the calibration measurements further include the effect of the backscattered calibrator beam. Consequently, the control entity may obtain the calibrator system signal based on a difference between the two types of measurements, e.g. by subtracting the measurement results obtained from the normal measurements from those obtained from the calibration measurements.

In a non-limiting example, substantially at time *t*₀ the control entity may carry out the following:
- operate the lidar assembly 300 to carry out a first calibration measurement and record a first calibration measurement signal *C*₀,
- operate the lidar assembly 300 to carry out a first normal measurement and record a first normal measurement signal *N*₀.

The control entity may derive a first calibrator system signal *P*₀ as a difference between the first calibration measurement signal *C*₀ and the first normal measurement signal *N*₀, e.g. as *P*₀ = *C*₀ - *N*₀*.* Subsequently, substantially at time *t*₁, the control entity may carry out the following:
- operate the lidar assembly 300 to carry out a second calibration measurement and record a second calibration measurement signal *C*₁,
- operate the lidar assembly 300 to carry out a second normal measurement and record a second normal measurement signal *N*₁.

The control entity may derive a second calibrator system signal *P*₁ as a difference between the second calibration measurement signal *C*₁ and the second normal measurement signal *N*₁, e.g. as *P*₁ *= C*₁ *- N*₁.

The control entity may apply the first calibrator system signal *P*₀ and the second calibrator system signal *P*₁ to carry out the autocalibration of the lidar assembly 300. As an example in this regard, the control entity may derive the first calibrator system signal *P*₀ based on the one or more calibration measurements and the one or more normal measurements carried out close to the time instant *t*₀ and derive the second calibrator system signal *P*₁ based on the one or more calibration measurements and the one or more normal measurements carried out close to the time instant *t*₁. Consequently, the control entity may observe, based on the first and second calibrator system signals *P*₀ and *P*₁, a change in optical sensitivity of the lidar assembly 300 by *P*₁/*P*₀ from the time instant *t*₀ to the time instant *t*₁. Hence, if an initial calibration of the lidar assembly 300 (e.g. at a factory upon its manufacturing) was carried at and around the time instant *t*₀, the measurement signals obtained via normal measurements (e.g. atmospheric signals) carried out at and after the time instant *t*₁ may be multiplied by a calibration factor *P*₀/*P*₁ to obtain respective calibrated measurement signals to ensure maintaining correct calibration of the lidar assembly 300. In the course of subsequent operation of the lidar assembly 300 (after the time instant *t*₁) the control entity may derive respective further calibrator system signals *P*ₖ at or around respective time instants *t*ₖ, apply the above-described processing to observe further changes in the optical sensitivity of the lidar assembly 300 (e.g. by *P*ₖ/*P*₀) and apply a respective calibration factor *P*₀/*P*ₖ to multiply the atmospheric signals received at and after the respective time instant *t*ₖ in order to ensure maintaining correct calibration of the lidar assembly 300.

Usage of the calibration factor *P*₀/*P*₁ (or the respective calibration factor *P*₀/*P*ₖ) improves reliability and accuracy of the measurement results obtained by the respective lidar device and also makes the (calibrated) measurement signals obtained after a prolonged period of usage of the respective lidar device in field conditions more readily comparable to past (calibrated) measurement signals obtained via operation of the respective lidar device. As non-limiting examples in this regard, the calibration may serve to compensate for measurement errors arising from changes in respective operation of components of the lidar assembly 300 and/or subtle changes of relative positions of components of the lidar assembly 300 that may occur over time, e.g. one or more of the following:
- Changes in operation of the transmitter 101, for example changes in transmission power (e.g. laser power);
- Changes in operation of the receiver 102, for example changes in responsivity of a photodetector (e.g. a photodiode such as an avalanche photodiode);
- Changes in respective focusing of the transmitter 101 and/or the receiver 102;
- Changes in optical alignment between the transmitter 101 and the receiver 102.

Figure 4 schematically illustrates some components of a lidar assembly 300', which is a variation of the lidar assembly 300. Therein, the difference to the lidar assembly 300 is that the calibrator subsystem comprises a light detector element 220 instead of the absorber element 219, where the light detector element 220 is arranged in such a position (with respect to the moveable mirror 218 and other components of the calibrator subsystem) that the moveable mirror 218 in the second position reflects the calibrator beam towards the light detector element 220. The light detector element 220 may comprise, for example, a photodetector such as a photodiode. Like the absorber element 219, also the light detector element 220 may serve to prevent provision of the backscattered calibrator beam towards the moveable mirror 218 and further to the receiver 102. In this regard, the light detector element 220 may be arranged to absorb and/or redirect (at least most of) the optical energy conveyed by the calibrator beam in order not to reflect or scatter the light directed thereat back towards the moveable mirror 218. In this regard, for example, one or more of the following approaches may be applied:
- the surface of the light detector element 220 may be substantially non-reflecting (e.g. provided with an anti-reflection coating such as anti-reflection coated black filter glass attenuator),
- the surface of the light detector element 220 may be provided in an oblique angle with respect to the main axis of the calibrator beam to direct any reflection from the surface away from the moveable mirror 218,
- the calibrator beam may be arranged to meet the surface of the light detector element 220 off-focus (but preferably such that the calibrator beam in its entirety meets the light-sensitive area of the light detector element 220.

The schematic example of Figure 4 illustrates a scenario where the moveable mirror 218 is in the second position, thereby reflecting the calibrator beam towards the surface of the light detector element 220. In a scenario where the moveable mirror 218 of the lidar assembly 300' is in the first position, the calibrator beam is reflected towards the scattering plate 216 (in a manner illustrated in the example of Figure 3A in the framework of the lidar assembly 300). While also in this example the second position of the moveable mirror 218 serves to set the calibrator subsystem in the inactive (i.e. non-operational) state, at the same time the light detector element 220 provides a detector signal that is descriptive of the optical power of the calibrator beam. the detector signal may be supplied to the control entity of the lidar assembly 300', thereby enabling the control entity to carry out measurement and/or analysis of the optical power of the transmitter beam originating from the transmitter 101. This, in turn, enables e.g. monitoring and/or fine-tuning of the transmission power of the transmitter 101.

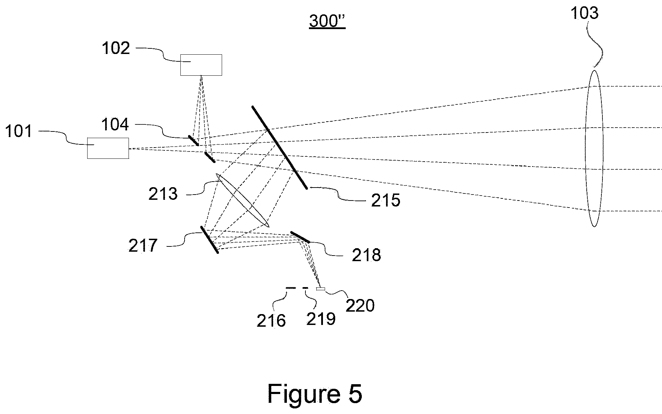

Figure 5 schematically illustrates some components of a lidar assembly 300", which is another variation of the lidar assembly 200', complemented with the activation mechanism. Therein, a difference to the lidar assemblies 300, 300' is that the calibrator subsystem of the lidar assembly 300" includes three targets: the scattering plate 216, the absorber element 219 and the light detector element 220 arranged with respect to other elements of the calibrator subsystem as described in the foregoing. Moreover, the moveable mirror 218 may be selectively arranged into one of at least three predefined positions with respect to the calibrator beam reflector 217 in order to the direct the calibrator beam to the respective target in the calibrator subsystem: in a first predefined position the moveable mirror 218 reflects the calibrator beam from the calibrator beam reflector 217 towards the scattering plate 216 such that the calibrator beam is focused at the surface of the scattering plate 216 (and reflects the backscattered calibrator beam from the scattering plate 216 towards the calibrator beam reflector 217), in a second predefined position the moveable mirror 218 reflects the calibrator beam towards the absorber element 219, and in a third predefined position the moveable mirror 218 reflects the calibrator beam towards the light detector element 220.

The schematic example of Figure 5 illustrates a scenario where the moveable mirror 218 is in the third position, thereby reflecting the calibrator beam towards the surface of the light detector element 220. In a scenario where the moveable mirror 218 of the lidar assembly 300" is in the first position, the calibrator beam is reflected towards the scattering plate 216 (in a manner illustrated in the example of Figure 3A in the framework of the lidar assembly 300), whereas in a scenario where the moveable mirror 218 of the lidar assembly 300" is in the second position, the calibrator beam is reflected towards the absorber element 219 (in a manner illustrated in the example of Figure 4 in the framework of the lidar assembly 300').

**In** a further variation, any of the lidar assemblies 300, 300' and 300" may be provided with a second scattering plate arranged such that the calibrator beam is focused at the predefined distance behind the surface of the second scattering plate (when guided thereto), the resulting backscattered calibrator beam hence modeling a receiver beam backscattered from a target (such as a bottom of a cloud) that is at the certain distance from the lidar device in the atmosphere but closer to the lidar device than the distance at which the primary lens assembly 103 focuses the light conveyed in the transmitter beam. Hence, the second scattering plate may serve as a further target in the calibrator subsystem, whereas the moveable mirror 218 may be selectively arranged into one of a plurality of predefined positions with respect to the calibrator beam reflector 217 in order to the direct the calibrator beam to the respective one of the targets.

As an example in this regard, the calibrator subsystem of the lidar assembly 300 or 300' may be further provided with a third target that involves a second scattering plate and the moveable mirror 218 may be selectively arranged into one of three predefined positions with respect to the calibrator beam reflector 217 to direct the calibrator beam to the respective one of the targets. In another example in this regard, the calibrator subsystem of the lidar assembly 300" may be further provided with a fourth target that involves a second scattering plate and the moveable mirror 218 may be selectively arranged into one of four predefined positions with respect to the calibrator beam reflector 217 to direct the calibrator beam to the respective one of the targets.

Through the lidar assemblies 300, 300' and 300" and their variations, the moveable mirror 218 serving as the selection mechanism within the optical arrangement may be rotatable about a pivot point to bring it into one of a plurality of predefined tilting angles with respect to the main axis of the calibrator beam in order to guide the calibrator beam towards one of the plurality of targets in the calibrator subsystem accordingly (and guide the backscattered calibrator beam towards the receiver 102). In an example, the rotational movement may be provided via an actuator coupled to the moveable mirror 218 and arranged to rotate moveable mirror 218 into one of the predefined tilting angles under control of the control entity of the lidar assembly 300, 300', 300".

In another example, the selection mechanism may enable translational movement of the moveable mirror 218 in direction of the main axis of the calibrator beam into one of a plurality of predefined distances from the calibrator beam reflector 217 in order to guide the calibrator beam towards one of the plurality of targets in the calibrator subsystem accordingly (and guide the backscattered calibrator beam towards the receiver 102). In this example, the tilting angle of the moveable mirror 218 may remain unchanged regardless of the distance from the calibrator beam reflector 217.

The selection mechanism may be operated under control of the control entity. As an example in this regard, the control entity may be arranged to periodically operate the selection mechanism to set the calibrator subsystem into the active (i.e. operational) state e.g. by guiding the calibrator beam towards the scattering plate 216 (or towards an additional scattering plate, if available), to carry out a calibration procedure and to set the calibrator subsystem back into the inactive (i.e. non-operational) state e.g. by guiding the calibrator beam towards the absorber element 219 or the light detector element 220. In another example, the control means may carry out activation of the calibrator subsystem, the calibration procedure and deactivation of the calibrator subsystem in response to a user command received via a user interface of a lidar device that employs the lidar assembly 300, 300', 300" or one of their variations.

In the examples pertaining to the lidar assemblies 200, 200', 300, 300', 300" and variations thereof described in the foregoing, the mirror 104 arranged between the transmitter 101 and the primary lens assembly 103 serves as an example of the beam reflector arranged between the transmitter 101 and the primary lens assembly 103 and arranged to reflect the backscattered light towards the receiver 102 while allowing the light originating from the transmitter 101 to pass through and exit the lidar assembly 200, 200', 300, 300', 300" through the primary lens assembly 103. In another example, the beam reflector may comprise a beam splitter (e.g. a 50:50 beam splitter), whereas in such an example the conceptual division of the primary lens assembly 103 into the center portion and the edge portion is not applicable but the light originating from the transmitter 101 is able to exit the lidar assembly 200, 200', 300, 300', 300" throughout the area of the primary lens assembly 103 and the backscattered light that enters the lidar assembly 200, 200', 300, 300', 300" throughout the area of the primary lens assembly 103 may be directed towards the receiver 102. In a further example, the beam reflector may comprise a mirror that only partially blocks the transmission path from the transmitter 101 to the primary lens assembly 103 (in a manner different from providing the hole in its central portion), whereas in such an example the area of the primary lens assembly 103 becomes (conceptually) divided into a first portion through which the light originating from the transmitter 101 exits the lidar assembly 200, 200', 300, 300', 300" and a second portion through which the backscattered light enters the lidar assembly 200, 200', 300, 300', 300". In one example, such a partially blocking mirror may have a shape of a semi-circle and it may be positioned such that it allows substantially a first half of the light beam originating from the transmitter 101 to pass towards the primary lens assembly 103 (while blocking a second half of the light beam) and that it reflects a second half of the backscattered light that arrives though the primary lens assembly 103 towards the receiver 102.

The lidar assemblies 300, 300', 300" (and their variants) described in the foregoing are appliable, for example, for atmospheric studies and a lidar device making use of such a lidar assembly may be referred to as an atmospheric lidar. In non-limiting examples, an atmospheric lidar employing the lidar assembly 300, 300', 300" (or a variant thereof) may be applied for functions such as cloud height estimation and/or estimation of one or more meteorological variables such as temperature, humidity, winds, etc. Moreover, such an atmospheric lidar may be additionally or alternatively applied for other functions, such as measurements of vapours (such as water vapour) and/or certain gases (such as carbon dioxide) in the atmosphere.

Although in the foregoing some functions of the lidar assembly 300, 300', 300" have been described with reference to certain features of the lidar assembly 300, 300', 300", those functions may be performable by other features whether described or not. Although some features have been described with reference to certain embodiments, those features may also be present in other embodiments whether described or not.

## Claims

1. A lidar assembly (300, 300', 300") for atmospheric measurements, the lidar assembly (300, 300', 300") comprising:
a primary lens assembly (103) for collimating a transmitter beam originating from a first focal point within the lidar assembly (300, 300', 300") to illuminate a target at a distance from the lidar assembly (300, 300', 300") and for focusing a backscattered light from the target to a second focal point within the lidar assembly (300, 300', 300");
a transmitter (101), arranged in said first focal point, for generating said transmitter beam for transmission towards the primary lens assembly (103);
a receiver (102), arranged in said second focal point, for capturing said backscattered light entering the lidar assembly (300, 300', 300") through the primary lens assembly (103);
a beam reflector (104), arranged between the first focal point and the primary lens assembly (103), for reflecting the backscattered light towards said second focal point such that the beam reflector (104) allows the transmitter beam to reach the primary lens assembly (103),
**characterized in that** the lidar assembly (300, 300', 300") comprises a calibrator subsystem comprising:
a beam sampler (215), arranged between the beam reflector (104) and the primary lens assembly (103), for reflecting a portion of the transmitter beam as a calibrator beam; and
an optical arrangement for transferring the calibrator beam towards a selected one of a plurality of targets in the calibrator subsystem wherein said plurality of targets include at least the following:
a first scattering plate (216) arranged to produce a diffuse reflection of the calibrator beam meeting its surface, thereby invoking a backscattered calibrator beam for transfer to the receiver (102) via said optical arrangement, via the beam sampler (215) and via the beam reflector (104), and
at least one element (219, 220) arranged to prevent provision of the backscattered calibrator beam.

2. A lidar assembly (300, 300', 300") according to claim 1, wherein
the beam reflector comprises a mirror (104) provided with a hole to enable at least a portion of the transmitter beam to travel through the mirror towards the primary lens assembly (103).

3. A lidar assembly (300, 300', 300") according to claim 1 or 2, wherein the optical arrangement is arranged to focus the calibrator beam on the surface of the first scattering plate (216) when the calibrator beam is transferred towards the first scattering plate (216).

4. A lidar assembly (300, 300', 300") according to claim 3, wherein
said plurality of targets comprises a second scattering plate for producing a diffuse reflection of the calibrator beam meeting its surface, and
the optical arrangement is arranged to focus the calibrator beam behind the surface of the second scattering plate when the calibrator beam is transferred towards the second scattering plate.

5. A lidar assembly (300, 300', 300") according to claim 1 or 2, wherein the optical arrangement is arranged to focus the calibrator beam behind the surface of the first scattering plate (216) when the calibrator beam is transferred towards the first scattering plate (216).

6. A lidar assembly (300', 300") according to any of claims 1 to 5, wherein said at least one element arranged to prevent provision of the backscattered calibrator beam comprises a light detector element (220) to facilitate estimating optical energy conveyed by the calibrator beam and wherein at least one of the following applies:
the optical arrangement is arranged to focus the calibrator beam off the surface of the light detector element (220) when the calibrator beam is transferred towards the light detector element (220),
the light detector element (220) comprises a substantially non-reflecting surface, and
the surface of the light detector element (220) is arranged in an oblique angle with respect to a main axis of the calibrator beam.

7. A lidar assembly (300, 300', 300") according to any of claims 1 to 6, wherein said at least one element arranged to prevent provision of the backscattered calibrator beam comprises an absorber element (219) and wherein at least one of the following applies:
the absorber element (219) comprises a substantially non-reflecting surface,
the surface of the absorber element (219) is arranged in an oblique angle with respect to a main axis of the calibrator beam, and
the optical arrangement is arranged to focus the calibrator beam off the surface of the absorber element (219) when the calibrator beam is transferred towards the absorber element (219).

8. A lidar assembly (300, 300', 300") according to any of claims 1 to 7, wherein the beam sampler (215) comprises a glass surface for reflecting said portion of the transmitter beam as the calibrator beam.

9. A lidar assembly (300, 300', 300") according to any of claims 1 to 8, wherein the optical arrangement comprises a calibrator lens assembly (213) for focusing the calibrator beam at the scattering plate (216) when the calibrator beam is transferred towards the scattering plate (216).

10. A lidar assembly (300, 300', 300") according to claim 9, wherein said calibrator lens assembly (213) comprises two lenses arranged in the same optical axis, whereas each of the two lenses has optical characteristics substantially similar to those of a single lens of the primary lens assembly (103) and have a diameter that is substantially half of a diameter of the single lens of the primary lens assembly (103).

11. A lidar assembly (300, 300', 300") according to any of claims 1 to 10, wherein the optical arrangement comprises a calibrator beam reflector (217) for reflecting the calibrator beam such that its main axis is substantially in parallel with main axis of the transmitter beam.

12. A lidar assembly (300, 300', 300") according to any of claims 1 to 11, wherein the calibrator subsystem comprises a selection mechanism for selectively transferring the calibrator beam towards one of the plurality of targets in the calibrator subsystem.

13. A lidar assembly (300, 300', 300") according to any of claims 1 to 12, wherein the selection mechanism comprises a moveable mirror (218) that is selectively arrangeable into one of a plurality of predefined positions, wherein each predefined position results in the moveable mirror (218) reflecting the calibrator beam towards a corresponding one of said plurality of targets.

14. A lidar assembly (300, 300', 300") according to claim 13, wherein the moveable mirror is rotatable about a pivot point into a selected one of said plurality of predefined positions.

15. A lidar assembly (300, 300', 300") according to any of claims 1 to 14, comprising a control entity arranged to:
operate the transmitter (101), the receiver (102) and the calibrator subsystem to derive a first calibrator system signal that is descriptive of backscattered calibrator beam at a first time instant;
operate the transmitter (102), the receiver (102) and the calibrator subsystem to derive a second calibrator system signal that is descriptive of backscattered calibrator beam at a second time instant that occurs later than the first time instant;
derive a calibration factor on basis of the first and second calibrator system signals;
apply, at and/or after the second time instant, the calibration factor to adjust measurement signals recorded on basis of backscattered light captured at the receiver (102).

16. A lidar assembly (300, 300', 300") according to claim 15, wherein the control entity is arranged to:
operate, substantially at the first time instant, the calibrator subsystem to transfer the calibrator beam to the first scattering plate (216) to obtain a first calibration measurement signal;
operate, substantially at the first time instant, the calibrator subsystem to transfer the calibrator beam to said at least one element arranged to prevent provision of the backscattered calibrator beam to obtain a first normal measurement signal;
operate, substantially at the second time instant, the calibrator subsystem to transfer the calibrator beam to the first scattering plate (216) to obtain a second calibration measurement signal;
operate, substantially at the second time instant, the calibrator subsystem to transfer the calibrator beam to said at least one element arranged to prevent provision of the backscattered calibrator beam to obtain a second normal measurement signal;
derive the first calibrator system signal as a difference between the first calibration measurement signal and the first normal measurement signal; and
derive the second calibrator system signal as a difference between the second calibration measurement signal and the second normal measurement signal.

17. A lidar assembly (300, 300', 300") according to claim 15 or 16, wherein the control entity is arranged to derive the calibration factor as a ratio of the first and second calibrator system signals.

18. A lidar assembly (300, 300', 300") according to any of claims 15 to 17, wherein the control entity is arranged to adjust, at and/or after the second time instant, said recorded measurement signals via multiplying them by the calibration factor.

## Patentansprüche

1. Lidar-Baugruppe (300, 300', 300") für atmosphärische Messungen, wobei die Lidar-Baugruppe (300, 300', 300") Folgendes umfasst:
eine Primärlinsenbaugruppe (103) zum Kollimieren eines Senderstrahls, der von einem ersten Brennpunkt innerhalb der Lidar-Baugruppe (300, 300', 300") stammt, um ein Ziel in einer Entfernung von der Lidar-Baugruppe (300, 300', 300") zu beleuchten, und zum Fokussieren von rückgestreutem Licht von dem Ziel an einem zweiten Brennpunkt innerhalb der Lidar-Baugruppe (300, 300', 300");
einen Sender (101), der an dem ersten Brennpunkt angeordnet ist, zum Erzeugen des Senderstrahls zur Übertragung zu der Primärlinsenbaugruppe (103) hin;
einen Empfänger (102), der an dem zweiten Brennpunkt angeordnet ist, zum Erfassen des rückgestreuten Lichts, das durch die Primärlinsenbaugruppe (103) in die Lidar-Baugruppe (300, 300', 300") eintritt;
einen Strahlreflektor (104), der zwischen dem ersten Brennpunkt und der Primärlinsenbaugruppe (103) angeordnet ist, zum Reflektieren des rückgestreuten Lichts zu dem zweiten Brennpunkt, so dass der Strahlreflektor (104) ermöglicht, dass der Senderstrahl die Primärlinsenbaugruppe (103) erreicht,
**dadurch gekennzeichnet, dass** die Lidar-Baugruppe (300, 300', 300") ein Kalibratorsubsystem umfasst, das Folgendes umfasst:
einen Strahl-Sampler (215), der zwischen dem Strahlreflektor (104) und der Primärlinsenbaugruppe (103) angeordnet ist, zum Reflektieren eines Teils des Senderstrahls als ein Kalibratorstrahl; und
eine optische Anordnung zum Transferieren des Kalibratorstrahls zu einem ausgewählten von mehreren Zielen in dem Kalibratorsubsystem, wobei die mehreren Ziele wenigstens Folgendes beinhalten:
eine erste Streuplatte (216), die zum Produzieren einer diffusen Reflexion des Kalibratorstrahls produziert ist, der auf ihre Oberfläche trifft, wodurch ein rückgestreuter Kalibratorstrahl zum Transfer zu dem Empfänger (102) über die Optikanordnung, über den Strahl-Sampler (215) und über den Strahlreflektor (104) hervorgerufen wird, und
wenigstens ein Element (219, 220), das zum Verhindern einer Bereitstellung des rückgestreuten Kalibratorstrahls eingerichtet ist.

2. Lidar-Baugruppe (300, 300', 300") nach Anspruch 1, wobei
der Strahlreflektor einen Spiegel (104) umfasst, der mit einem Loch versehen ist, um zu ermöglichen, dass sich wenigstens ein Teil des Senderstrahls durch den Spiegel zu der Primärlinsenbaugruppe (103) ausbreitet.

3. Lidar-Baugruppe (300, 300', 300") nach Anspruch 1 oder 2, wobei die optische Anordnung zum Fokussieren des Kalibratorstrahls auf der Oberfläche der ersten Streuplatte (216) eingerichtet ist, wenn der Kalibratorstrahl zu der ersten Streuplatte (216) hin transferiert wird.

4. Lidar-Baugruppe (300, 300', 300") nach Anspruch 3, wobei
die mehreren Ziele eine zweite Streuplatte zum Produzieren einer diffusen Reflexion des Kalibratorstrahls umfassen, der auf ihre Oberfläche trifft, und
die optische Anordnung zum Fokussieren des Kalibratorstrahls hinter der Oberfläche der zweiten Streuplatte eingerichtet ist, wenn der Kalibratorstrahl zu der zweiten Streuplatte hin transferiert wird.

5. Lidar-Baugruppe (300, 300', 300") nach Anspruch 1 oder 2, wobei die optische Anordnung zum Fokussieren des Kalibratorstrahls hinter der Oberfläche der ersten Streuplatte (216) eingerichtet ist, wenn der Kalibratorstrahl zu der ersten Streuplatte (216) hin transferiert wird.

6. Lidar-Baugruppe (300', 300") nach einem der Ansprüche 1 bis 5, wobei das wenigstens eine Element, das zum Verhindern einer Bereitstellung des rückgestreuten Kalibratorstrahls eingerichtet ist, ein Lichtdetektorelement (220) umfasst, um das Schätzen einer optischen Energie zu ermöglichen, die durch den Kalibratorstrahl übertragen wird, und wobei wenigstens eines von Folgendem gilt:
die optische Anordnung ist zum Fokussieren des Kalibratorstrahls außerhalb der Oberfläche des Lichtdetektorelements (220) eingerichtet, wenn der Kalibratorstrahl zu dem Lichtdetektorelement (220) hin transferiert wird,
das Lichtdetektorelement (220) umfasst eine im Wesentlichen nichtreflektierende Oberfläche, und
die Oberfläche des Lichtdetektorelements (220) ist in einem schrägen Winkel mit Bezug auf eine Hauptachse des Kalibratorstrahls angeordnet.

7. Lidar-Baugruppe (300, 300', 300") nach einem der Ansprüche 1 bis 6, wobei das wenigstens eine Element, das zum Verhindern einer Bereitstellung des rückgestreuten Kalibratorstrahls eingerichtet ist, ein Absorberelement (219) umfasst, und wobei wenigstens eines von Folgendem gilt:
das Absorberelement (219) umfasst eine im Wesentlichen nichtreflektierende Oberfläche,
die Oberfläche des Absorberelements (219) ist in einem schrägen Winkel mit Bezug auf eine Hauptachse des Kalibratorstrahls angeordnet, und
die optische Anordnung ist zum Fokussieren des Kalibratorstrahls außerhalb des Absorberelements (219) eingerichtet, wenn der Kalibratorstrahl zu dem Absorberelement (219) hin transferiert wird.

8. Lidar-Baugruppe (300, 300', 300") nach einem der Ansprüche 1 bis 7, wobei der Strahl-Sampler (215) eine Glasoberfläche zum Reflektieren des Teils des Senderstrahls als der Kalibratorstrahl umfasst.

9. Lidar-Baugruppe (300, 300', 300") nach einem der Ansprüche 1 bis 8, wobei die optische Anordnung eine Kalibratorlinsenbaugruppe (213) zum Fokussieren des Kalibratorstrahls auf der Streuplatte (216) eingerichtet ist, wenn der Kalibratorstrahl zu der Streuplatte (216) hin transferiert wird.

10. Lidar-Baugruppe (300, 300', 300") nach Anspruch 9, wobei die Kalibratorlinsenbaugruppe (213) zwei Linsen umfasst, die auf derselben optischen Achse angeordnet sind, wohingegen jede der zwei Linsen optische Charakteristiken aufweist, die jenen einer einzelnen Linse der Primärlinsenbaugruppe (103) im Wesentlichen ähnlich sind, und einen Durchmesser aufweist, der im Wesentlichen eine Hälfte eines Durchmessers der einzelnen Linse der Primärlinsenbaugruppe (103) ist.

11. Lidar-Baugruppe (300, 300', 300") nach einem der Ansprüche 1 bis 10, wobei die optische Anordnung einen Kalibratorstrahlreflektor (217) zum Reflektieren des Kalibratorstrahls derart umfasst, dass seine Hauptachse im Wesentlichen parallel zu einer Hauptachse des Senderstrahls ist.

12. Lidar-Baugruppe (300, 300', 300") nach einem der Ansprüche 1 bis 11, wobei das Kalibratorsubsystem einen Auswahlmechanismus zum selektiven Transferieren des Kalibratorstrahls zu einem der mehreren Ziele in dem Kalibratorsubsystem umfasst.

13. Lidar-Baugruppe (300, 300', 300") nach einem der Ansprüche 1 bis 12, wobei der Auswahlmechanismus einen beweglichen Spiegel (218) umfasst, der selektiv an einer von mehreren vordefinierten Positionen angeordnet werden kann, wobei jede vordefinierte Position dazu führt, dass der bewegliche Spiegel (218) den Kalibratorstrahl zu einem entsprechenden der mehreren Ziele reflektiert.

14. Lidar-Baugruppe (300, 300', 300") nach Anspruch 13, wobei der bewegliche Spiegel um einen Schwenkpunkt an eine ausgewählte der mehreren vordefinierten Positionen drehbar ist.

15. Lidar-Baugruppe (300, 300', 300") nach einem der Ansprüche 1 bis 14, die eine Steuerentität umfasst, die zu Folgendem eingerichtet ist:
Betreiben des Senders (101), des Empfängers (102) und des Kalibratorsubsystems zum Ableiten eines ersten Kalibratorsystemsignals, das einen rückgestreuten Kalibratorstrahl zu einem ersten Zeitpunkt beschreibt;
Betreiben des Senders (102), des Empfängers (102) und des Kalibratorsubsystems zum Ableiten eines zweiten Kalibratorsystemsignals, das einen rückgestreuten Kalibratorstrahl zu einem zweiten Zeitpunkt beschreibt, der später als der erste Zeitpunkt auftritt;
Ableiten eines Kalibrierungsfaktors basierend auf dem ersten und zweiten Kalibratorsystemsignal;
Anwenden, zu und/oder nach dem zweiten Zeitpunkt, des Kalibrierungsfaktors, um Messungssignale anzupassen, die basierend auf rückgestreutem Licht aufgezeichnet werden, das an dem Empfänger (102) erfasst wird.

16. Lidar-Baugruppe (300, 300', 300") nach Anspruch 15, wobei die Steuerentität zu Folgendem eingerichtet ist:
Betreiben, im Wesentlichen zu dem ersten Zeitpunkt, des Kalibratorsubsystems zum Transferieren des Kalibratorstrahls zu der ersten Streuplatte (216), um ein erstes Kalibrierungsmessungssignal zu erhalten;
Betreiben, im Wesentlichen zu dem ersten Zeitpunkt, des Kalibratorsubsystems zum Transferieren des Kalibratorstrahls zu dem wenigstens einen Element, das zum Verhindern einer Bereitstellung des rückgestreuten Kalibratorstrahls eingerichtet ist, um ein erstes Normalmessungssignal zu erhalten;
Betreiben, im Wesentlichen zu dem zweiten Zeitpunkt, des Kalibratorsubsystems zum Transferieren des Kalibratorstrahls zu der ersten Streuplatte (216), um ein zweites Kalibrierungsmessungssignal zu erhalten;
Betreiben, im Wesentlichen zu dem zweiten Zeitpunkt, des Kalibratorsubsystems zum Transferieren des Kalibratorstrahls zu dem wenigstens einen Element, das zum Verhindern einer Bereitstellung des rückgestreuten Kalibratorstrahls eingerichtet ist, um ein zweites Normalmessungssignal zu erhalten;
Ableiten des ersten Kalibratorsystemsignals als eine Differenz zwischen dem ersten Kalibrierungsmessungssignal und dem ersten Normalmessungssignal; und
Ableiten des zweiten Kalibratorsystemsignals als eine Differenz zwischen dem zweiten Kalibrierungsmessungssignal und dem zweiten Normalmessungssignal.

17. Lidar-Baugruppe (300, 300', 300") nach Anspruch 15 oder 16, wobei die Steuerentität zum Ableiten des Kalibrierungsfaktors als ein Verhältnis des ersten und zweiten Kalibratorsystemsignals eingerichtet ist.

18. Lidar-Baugruppe (300, 300', 300") nach einem der Ansprüche 15 bis 17, wobei die Steuerentität zum Anpassen, zu und/oder nach dem zweiten Zeitpunkt, der aufgezeichneten Messungssignale mittels Multiplizieren von ihnen mit dem Kalibrierungsfaktor eingerichtet ist.

## Revendications

1. Ensemble lidar (300, 300', 300") pour des mesures atmosphériques, l'ensemble lidar (300, 300', 300") comprenant :
un ensemble lentille primaire (103) destiné à collimater un faisceau d'émetteur provenant d'un premier point focal à l'intérieur de l'ensemble lidar (300, 300', 300") pour éclairer une cible à une certaine distance de l'ensemble lidar (300, 300', 300") et à focaliser une lumière rétrodiffusée depuis la cible sur un deuxième point focal à l'intérieur de l'ensemble lidar (300, 300', 300") ;
un émetteur (101), disposé audit premier point focal, destiné à générer ledit faisceau d'émetteur pour transmission vers l'ensemble lentille primaire (103) ;
un récepteur (102), disposé audit deuxième point focal, destiné à capturer ladite lumière rétrodiffusée entrant dans l'ensemble lidar (300, 300', 300") par l'ensemble lentille primaire (103) ;
un réflecteur de faisceau (104), disposé entre le premier point focal et l'ensemble lentille primaire (103), destiné à réfléchir la lumière rétrodiffusée vers ledit deuxième point focal, de sorte que le réflecteur de faisceau (104) permet au faisceau d'émetteur d'atteindre l'ensemble lentille primaire (103),
**caractérisé en ce que** l'ensemble lidar (300, 300', 300") comprend un sous-système d'étalonnage comprenant :
un échantillonneur de faisceau (215), disposé entre le réflecteur de faisceau (104) et l'ensemble lentille primaire (103), destiné à réfléchir une partie du faisceau d'émetteur en tant que faisceau d'étalonnage ; et
un agencement optique destiné à transférer le faisceau d'étalonnage vers une cible sélectionnée parmi une pluralité de cibles dans le sous-système d'étalonnage, ladite pluralité de cibles comportant au moins les éléments suivants :
une première plaque de diffusion (216) conçue pour produire une réflexion diffuse du faisceau d'étalonnage rencontrant sa surface, ce qui permet de générer un faisceau d'étalonnage rétrodiffusé pour transfert au récepteur (102) par le biais dudit agencement optique, par le biais de l'échantillonneur de faisceau (215) et par le biais du réflecteur de faisceau (104), et
au moins un élément (219, 220) conçu pour empêcher la fourniture du faisceau d'étalonnage rétrodiffusé.

2. Ensemble lidar (300, 300', 300") selon la revendication 1, dans lequel
le réflecteur de faisceau comprend un miroir (104) pourvu d'un trou permettant à au moins une partie du faisceau d'émetteur de traverser le miroir en direction de l'ensemble lentille primaire (103).

3. Ensemble lidar (300, 300', 300") selon la revendication 1 ou 2, dans lequel l'agencement optique est conçu pour focaliser le faisceau d'étalonnage sur la surface de la première plaque de diffusion (216) quand le faisceau d'étalonnage est transféré vers la première plaque de diffusion (216).

4. Ensemble lidar (300, 300', 300") selon la revendication 3, dans lequel
ladite pluralité de cibles comprend une deuxième plaque de diffusion destinée à produire une réflexion diffuse du faisceau d'étalonnage rencontrant sa surface, et
l'agencement optique est conçu pour focaliser le faisceau d'étalonnage derrière la surface de la deuxième plaque de diffusion quand le faisceau d'étalonnage est transféré vers la deuxième plaque de diffusion.

5. Ensemble lidar (300, 300', 300") selon la revendication 1 ou 2, dans lequel l'agencement optique est conçu pour focaliser le faisceau d'étalonnage derrière la surface de la première plaque de diffusion (216) quand le faisceau d'étalonnage est transféré vers la première plaque de diffusion (216).

6. Ensemble lidar (300', 300") selon l'une quelconque des revendications 1 à 5, dans lequel ledit au moins un élément conçu pour empêcher la fourniture du faisceau d'étalonnage rétrodiffusé comprend un élément de détection de lumière (220) pour faciliter l'estimation de l'énergie optique transportée par le faisceau d'étalonnage, et dans lequel au moins une des situations suivantes s'applique :
l'agencement optique est conçu pour focaliser le faisceau d'étalonnage en dehors de la surface de l'élément de détection de lumière (220) quand le faisceau d'étalonnage est transféré vers l'élément de détection de lumière (220),
l'élément de détection de lumière (220) comprend une surface sensiblement non réfléchissante, et
la surface de l'élément de détection de lumière (220) est disposée à un angle oblique par rapport à un axe principal du faisceau d'étalonnage.

7. Ensemble lidar (300, 300', 300") selon l'une quelconque des revendications 1 à 6, dans lequel ledit au moins un élément conçu pour empêcher la fourniture du faisceau d'étalonnage rétrodiffusé comprend un élément d'absorption (219), et dans lequel au moins une des situations suivantes s'applique :
l'élément d'absorption (219) comprend une surface sensiblement non réfléchissante,
la surface de l'élément d'absorption (219) est disposée à un angle oblique par rapport à un axe principal du faisceau d'étalonnage, et
l'agencement optique est conçu pour focaliser le faisceau d'étalonnage en dehors de la surface de l'élément d'absorption (219) quand le faisceau d'étalonnage est transféré vers l'élément d'absorption (219).

8. Ensemble lidar (300, 300', 300") selon l'une quelconque des revendications 1 à 7, dans lequel l'échantillonneur de faisceau (215) comprend une surface de verre destinée à réfléchir ladite partie du faisceau d'émetteur en tant que faisceau d'étalonnage.

9. Ensemble lidar (300, 300', 300") selon l'une quelconque des revendications 1 à 8, dans lequel l'agencement optique comprend un ensemble lentille d'étalonnage (213) destiné à focaliser le faisceau d'étalonnage au niveau de la plaque de diffusion (216) quand le faisceau d'étalonnage est transféré vers la plaque de diffusion (216).

10. Ensemble lidar (300, 300', 300") selon la revendication 9, dans lequel ledit ensemble lentille d'étalonnage (213) comprend deux lentilles disposées sur le même axe optique, tandis que chacune des deux lentilles possède des caractéristiques optiques sensiblement similaires à celles d'une lentille unique de l'ensemble lentille primaire (103) et possède un diamètre qui représente sensiblement la moitié d'un diamètre de la lentille unique de l'ensemble lentille primaire (103).

11. Ensemble lidar (300, 300', 300") selon l'une quelconque des revendications 1 à 10, dans lequel l'agencement optique comprend un réflecteur de faisceau d'étalonnage (217) destiné à réfléchir le faisceau d'étalonnage de telle sorte que son axe principal soit sensiblement parallèle à l'axe principal du faisceau d'émetteur.

12. Ensemble lidar (300, 300', 300") selon l'une quelconque des revendications 1 à 11, dans lequel le sous-système d'étalonnage comprend un mécanisme de sélection destiné à transférer sélectivement le faisceau d'étalonnage vers une cible de la pluralité de cibles dans le sous-système d'étalonnage.

13. Ensemble lidar (300, 300', 300") selon l'une quelconque des revendications 1 à 12, dans lequel le mécanisme de sélection comprend un miroir mobile (218) qui peut être disposé sélectivement à une position d'une pluralité de positions prédéfinies, chaque position prédéfinie induisant la réflexion par le miroir mobile (218) du faisceau d'étalonnage vers une cible correspondante de ladite pluralité de cibles.

14. Ensemble lidar (300, 300', 300") selon la revendication 13, dans lequel le miroir mobile peut tourner autour d'un point pivot à une position sélectionnée de ladite pluralité de positions prédéfinies.

15. Ensemble lidar (300, 300', 300") selon l'une quelconque des revendications 1 à 14, comprenant une entité de commande conçue pour :
faire fonctionner l'émetteur (101), le récepteur (102) et le sous-système d'étalonnage pour dériver un premier signal de système d'étalonnage qui décrit le faisceau d'étalonnage rétrodiffusé à un premier instant ;
faire fonctionner l'émetteur (102), le récepteur (102) et le sous-système d'étalonnage pour dériver un deuxième signal de système d'étalonnage qui décrit le faisceau d'étalonnage rétrodiffusé à un deuxième instant qui arrive après le premier instant ;
déduire un facteur d'étalonnage en fonction des premier et deuxième signaux de système d'étalonnage ;
appliquer, au deuxième instant et/ou après celui-ci, le facteur d'étalonnage pour ajuster des signaux de mesure enregistrés en fonction de la lumière rétrodiffusée capturée au niveau du récepteur (102).

16. Ensemble lidar (300, 300', 300") selon la revendication 15, dans lequel l'entité de commande est conçue pour :
faire fonctionner, sensiblement au premier instant, le sous-système d'étalonnage pour transférer le faisceau d'étalonnage à la première plaque de diffusion (216) afin d'obtenir un premier signal de mesure d'étalonnage ;
faire fonctionner, sensiblement au premier instant, le sous-système d'étalonnage pour transférer le faisceau d'étalonnage audit au moins un élément conçu pour empêcher la fourniture du faisceau d'étalonnage rétrodiffusé afin d'obtenir un premier signal de mesure normal ;
faire fonctionner, sensiblement au deuxième instant, le sous-système d'étalonnage pour transférer le faisceau d'étalonnage à la première plaque de diffusion (216) afin d'obtenir un deuxième signal de mesure d'étalonnage ;
faire fonctionner, sensiblement au deuxième instant, le sous-système d'étalonnage pour transférer le faisceau d'étalonnage audit au moins un élément conçu pour empêcher la fourniture du faisceau d'étalonnage rétrodiffusé afin d'obtenir un deuxième signal de mesure normal ;
dériver le premier signal de système d'étalonnage comme une différence entre le premier signal de mesure d'étalonnage et le premier signal de mesure normal ; et
dériver le deuxième signal de système d'étalonnage comme une différence entre le deuxième signal de mesure d'étalonnage et le deuxième signal de mesure normal.

17. Ensemble lidar (300, 300', 300") selon la revendication 15 ou 16, dans lequel l'entité de commande est conçue pour déduire le facteur d'étalonnage sous la forme d'un rapport des premier et deuxième signaux de système d'étalonnage.

18. Ensemble lidar (300, 300', 300") selon l'une quelconque des revendications 15 à 17, dans lequel l'entité de commande est conçue pour ajuster, au deuxième instant et/ou après celui-ci, lesdits signaux de mesure enregistrés en les multipliant par le facteur d'étalonnage.
